## Europäisches Patentamt

## European Patent Office

## Office européen des brevets

(11) Veröffentlichungsnummer: **0 272 406**
**A2**

# (12) EUROPÄISCHE PATENTANMELDUNG

(21) Anmeldenummer: 87115628.7

(22) Anmeldetag: 24.10.87

(51) Int. Cl.⁴: **E21B 43/22**

(30) Priorität: 24.12.86 DE 3644385

(43) Veröffentlichungstag der Anmeldung:
29.06.88 Patentblatt 88/26

(84) Benannte Vertragsstaaten:
**DE GB NL**

(71) Anmelder: **HÜLS AKTIENGESELLSCHAFT**
**Patentabteilung / PB 15 - Postfach 13 20**
**D-4370 Marl 1(DE)**

(72) Erfinder: **Balzer, Dieter, Dr.**
**Talstrasse 21**
**D-4358 Haltern(DE)**

(54) Verfahren zur erhöhten Gewinnung von Erdöl aus einer unterirdischen Lagerstätte durch Tensidfluten.

(57) Das Tensidfluten in Lagerstätten mit starken Temperaturschwankungen oder einem Temperaturgradienten ist problematisch, da ein an sich lösliches und für die Ölmobilisierung wirksames Tensid diese Eigenschaften nicht über weite Temperaturbereiche von z. B. 10 bis 100 °C beibehält. Das neue Verfahren bringt nun eine gute Tensidwirksamkeit selbst bei so extremen zeitlichen und/oder örtlichen Temperaturschwankungen wie zwischen 10 und 100 °C.

Es wird eine Mischung aus einem leichter und einem schwerer löslichen Sulfonat eingesetzt. Die Löslichkeiten werden definiert durch die Menge an Butylglykol bzw. Butyldiglykol, welche zur Herstellung einer 4gewichtsprozentigen Sulfonatlösung in synthetischem Seewasser erforderlich ist.

Gewinnung von Erdöl durch Tensidfluten, vor allem in Lagerstätten mit zeitlichen oder räumlichen Temperaturänderungen.

EP 0 272 406 A2

# Verfahren zur erhöhten Gewinnung von Erdöl aus einer unterirdischen Lagerstätte durch Tensidfluten

Bei der Gewinnung von Öl aus Speichergestein gelingt es im allgemeinen nur, einen Bruchteil des ursprünglich vorhandenen Öls durch primäre Gewinnungsverfahren zu fördern. Hierbei gelangt das Öl infolge des natürlichen Lagerstättendrucks an die Erdoberfläche. Bei der sekundären Ölgewinnung wird gewöhnlich Wasser in eine oder mehrere Injektionsbohrungen der Formation eingepreßt und das Öl zu einer oder mehreren Produktionsbohrungen getrieben und dann an die Erdoberfläche gebracht. Dieses sogenannte Wasserfluten als Sekundärmaßnahme ist relativ billig und wird entsprechend häufig eingesetzt, führt jedoch in vielen Fällen nur zu einer geringen Mehrentölung der Lagerstätte.

Eine wirksame Verdrängung des Öls, die teurer, jedoch im Hinblick auf die zukünftige Ölverknappung volkswirtschaftlich erforderlich ist, gelingt durch tertiäre Maßnahmen. Darunter sind Verfahren zu verstehen, bei denen entweder die Viskosität des Öls erniedrigt und/oder die Viskosität des nachflutenden Wassers erhöht und/oder die Grenzflächenspannung zwischen Wasser und Öl erniedrigt werden.

Die meisten dieser Prozesse lassen sich entweder als Lösungs-oder Mischfluten, thermiscche Ölgewinnungsverfahren, Tensid-oder Polymerfluten bzw. als Kombination von mehreren der genannten Verfahren einordnen.

Thermische Gewinnungsverfahren beinhalten die Injizierung von Dampf oder heißem Wasser bzw. sie erfolgen als Untertage-Verbrennung. Lösungs-oder Mischungsverfahren bestehen im Injizieren eines Lösungsmittels für das Erdöl in die Lagerstätte, wobei dies ein Gas und/oder eine Flüssigkeit sein kann.

Bei den Tensidprozessen unterscheidet man, je nach Tensidkonzentration, gegebenenfalls Tensidtyp und Zusätzen, zwischen tensidgestütztem Wasserfluten (ein Verfahren das z. B. zur Injektivitätserhöhung von Einpreßbohrungen dienen kann oder einen "Lowtension-Prozeß" darstellt), micellarem Fluten und Emulsionsfluten. Die Tensidprozesse be ruhen in erster Linie auf einer starken Erniedrigung der Grenzflächenspannung zwischen Öl und Flutwasser. Des weiteren sind die Benetzbarkeit der Gesteinsoberfläche sowie die Mobilitätsverhältnisse von großer Bedeutung. Günstige Mobilitätsverhältnisse zwischen Öl und Wasser werden durch Polymere erzielt.

Die vorliegende Erfindung bezieht sich auf ein Verfahren zur Gewinnung von Öl durch Tensidfluten bzw. Micellar-Polymer-Fluten in mittel-bis höhersalinaren Lagerstätten.

Besonders bezieht sich die Erfindung auf ein Verfahren für Lagerstätten, die von starken Temperaturschwankungen oder einem Temperaturgradienten beherrscht werden.

Da die Temperatur des Speichergesteins im wesentlichen von dem Wärmefluß aus dem Erdinneren in den Oberflächenbereich bestimmt wird, beruhen nicht konstante Temperaturen entweder auf starken Lagerstättenneigungen oder auf einem Eingriff in das Naturgeschehen. Letzteres ist z. B. auch die Injektion von Wasser während des Wasserflutens. Lang andauerndes Wasserfluten, besonders von Hochtemperaturlagerstätten, führt häufig zur Ausbildung eines starken Temperaturgradienten. Besonders ausgeprägt ist dies bei den Hochtemperatur-Offshore-Lagerstätten, die mit kaltem Seewasser geflutet werden, was zu einer starken Abkühlung um die Injektionszonen führt. So sind z. B. bei Lagerstätten im Nordseebereich Temperaturspannen zwischen ca. 10 °C nahe der Injektionssonden und ca. 100 °C in entfernteren Bereichen bekannt. Ein entsprechendes Tensidflutverfahren soll jedoch möglichst in dem gesamten Temperaturbereich optimal wirksam sein. Dies setzt selbstverständlich voraus, daß das Tensid unter Lagerstättenbedingungen lange Zeit stabil ist.

Ein weiteres Problem des Tensidflutens besteht darin, daß viele geeignete Tenside, wie z. B. die große Gruppe der Alkyl-bzw. Alkylarylsulfonate eine niedrige Toleranzgrenze gegenüber der Salinität des Lagerstättenwassers besitzt. Besonders ausgeprägt ist die Empfindlichkeit dieser Tenside gegenüber Erdalkaliionen. Nun besitzen viele Lagerstättenwässer hohe Salinitäten; ein sehr beachtlicher Teil der nordamerikanischen Leichtöllagerstätten besitzt Salinitäten um 100 000 ppm und höher, wobei der Gehalt an gelösten Erdalkaliionen in den meisten Fällen beträchtlich ist. Auch das bei Offshore-Lagerstätten häufig zu Sekundärmaßnahmen injizierte Seewasser besitzt mit einem TDS-Wert von ca. 36 000 ppm und Erdalkaliionen von ca. 2 000 ppm eine weit oberhalb der Verträglichkeit der üblichen Sulfonate liegende Salinität.

Typische Tenside, die selbst gegenüber extrem hohen Gesamtsalinitäten und entsprechenden Erdalkaliionenkonzentrationen tolerant sind und hochwirksam Öl zu mobilisieren vermögen, sind z. B. carboximethylierte Oxethylate (vgl. US-PSS 4 478 281, 4 457 373 und 4 582 138). Dies setzt allerdings voraus, daß sie für die Bedingungen der jeweiligen Lagerstätte (Salinität, Ölcharakter, Temperatur, etc.) maßgeschneidert wurden. Relativ geringe Abweichungen der örtlichen Lagerstättentemperatur von einem Mittelwert hat auf die Tensidwirksamkeit keinen starken Einfluß. Starke Temperaturgradienten mit Temperaturspannen zwischen 10 und 100 °C jedoch verschlechtern die Wirkung drastisch.

Kombiniert man hingegen die Carboximethylierten Oxethylate mit den relativ hydrophoben Alkyl-, Alkylaryl-oder Dialkylarylsulfonaten, so gewinnt man Tensidsysteme, die in Gegenwart geeigneter Cosolventien über weite Temperaturbereiche - z. B. zwischen 10 und 100 °C - wirksam Öl zu mobilisieren vermögen. Diese kürzlich beobachtete Eigenschaft läßt sich bis zu einem gewissen Grad verstehen, wenn man die Löslichkeiten beider Tensidgruppen in Abhängigkeit von der Temperatur berücksichtigt. Die entsprechenden Koeffizienten verhalten sich nämlich überwiegend umgekehrt, so daß die Tensidaktivität über weite Temperaturbereiche in gewissem Umfang ausgeglichen wird, wie inzwischen auch Grenzflächenspannungsmessungen in Abhängigkeit der Temperatur gezeigt haben.

Völlig überraschend wurde nun beobachtet, daß sich die Aufgabe des Tensidflutens von Öllagerstätten mit sehr unterschiedlichen Temperaturen noch wirtschaftlicher lösen läßt, durch ein Verfahren zur erhöhten Gewinnung von Erdöl aus einer unterirdischen Lagerstätte, die mindestens durch eine Injektions-und eine Produktionsbohrung durchteuft ist, durch Einpressen einer Lösung oder Dispersion einer Mischung von mindestens 2 Sulfonaten, das dadurch gekennzeichnet ist, daß deren Löslichkeit insofern verschieden ist, als aus dem leichter löslichen Sulfonat durch Zugabe von 3 bis 11 Gewichtsprozent Butylglykol oder von 2 bis 8 Gewichtsprozent Butyldiglykol bei Zimmertemperatur in synthetischem Seewasser eine 4gewichtsprozentige Lösung gerade eben herstellbar ist, während aus dem schwerer löslichen Sulfonat erst durch Zugabe von 20 bis 60 Gewichtsprozent Butylglykol oder von 16 bis 40 Gewichtsprozent Butyldiglykol bei Zimmertemperatur in synthetischem Seewasser eine 4gewichtsprozentige Lösung gerade eben herstellbar ist.

Voraussetzung für die Wirksamkeit der Sulfonatmischung ist die zwar temperaturmäßig gleichsinnige, jedoch sehr unterschiedliche Löslichkeit der beiden Sulfonate in dem betreffenden Lagerstättenwasser in Gegenwart des Cosolvents.

Das leichter lösliche Tensid kann ein Monoalkylbenzolsulfonat mit 5 bis 13 Kohlenstoffatomen in der gegebenenfalls verzweigten Alkylkette, ein Di-bzw. Trialkylbenzolsulfonat mit 1 bis 10 Kohlenstoffatomen in den Alkylketten, wobei die Gesamtzahl der Kohlenstoffatome in den Alkylketten pro Molekül 5 bis 11 beträgt, oder ein Alkansulfonat mit 8 bis 18 Atomen sein.

Das schwerer lösliche Sulfonat kann ein Monoalkylbenzolsulfonat mit 14 bis 20 Kohlenstoffatomen in der Alkylkette, ein Di-bzw. Oligoalkylbenzolsulfonat mit 1 bis 20 Kohlenstoffatomen pro Alkylkette, wobei die Gesamtzahl der Kohlenstoffatome in den Alkylketten 12 bis 30 beträgt, ein Petroleumsulfonat oder ein Alkansulfonat mit 19 bis 26 C-Atomen sein. Die zu injizierende Tensidlösung oder -dispersion besitzt zweckmäßigerweise eine Konzentration von 0,1 bis 20 %.

Die Sluggröße der tensidhaltigen Flüssigkeit sollte 0,01 bis 2 Porenvolumen (PV) betragen.

Die Massen des leichter löslichen Sulfonats verhalten sich zu denen des schwerer löslichen wie 5 : 1 bis 1 : 3.

Nach der Injektion des Tensidslugs wird vorzugsweise Formations-oder Flutwasser in die Lagerstätte eingepreßt, wobei das Formations-oder Flutwasser zweckmäßigerweise ein wasserlösliches, viskositätserhöhendes Polymer enthält.

Vorzugsweise wird der Tensidmischung ein Cosolvent im Verhältnis 1 : 4 bis 4 : 1 zugesetzt.

Als Cosolventien werden ein-oder mehrwertige Alkohole oder Alkylether von mehrwertigen Alkoholen eingesetzt.

Erfindungsgemäß werden also leichter lösliche, d. h. in dem Wasser der betreffenden Lagerstätte in Gegenwart vergleichsweise geringer Cosolventmengen lösliche Sulfonate, in Mischung mit einem in dem betreffenden Lagerstättenwasser-Cosolvent-Gemisch weitgehend unlöslichen (Lösungsgrenze ca. 1 000 ppm), dem schwerer löslichen Sulfonat, eingesetzt. Die notwendigen Mengen des zur Lösung des leichter löslichen Sulfonats hier zu verwendenden Cosolvents hängen natürlich vom Cosolventtyp ab, wie am Beispiel der Monoalkylether von Glykol bzw. Diglykol in der folgenden Tabelle gezeigt wird.

3

| | Cosolventmengen (Gewichtsprozent, bezogen auf die Gesamtmischung aus Sulfonat, Seewasser und Glykolether) zur Herstellung einer 4prozentigen Sulfonatlösung in synthetischem Seewasser | | | |
|---|---|---|---|---|
| Sulfonate | Ethylenglykol | i-Propylglykol | Butylglykol | Butyldiglykol |
| leichter lösliche | 10 - 12 | 6 - 11 | 3 - 11 | 2 - 8 |
| schwerer lösliche | 20 - 60 | 20 - 50 | 20 - 60 | 16 - 40 |

Es sollen daher die leichter und schwerer löslichen Sulfonattypen, deren Gemische erfindungsgemäß einzusetzen sind, durch die oben angeführte Tabelle definiert sein.

Das leichter lösliche Sulfonat kann ein Monoalkylbenzolsulfonat mit 5 bis 13, vorzugsweise 7 bis 12 Kohlenstoffatomen in der Alkylkette, ein Di-bzw. Trialkylbenzolsulfonat mit 1 bis 10, vorzugsweise 3 bis 10 Kohlenstoffatomen in den Alkylketten, wobei die Gesamtzahl der C-Atome in den Alkylketten pro Molekül 5 bis 11, vorzugsweise 6 bis 11 Kohlenstoffatomen beträgt, oder ein Alkansulfonat mit 8 bis 18 C-Atomen sein.

Es können auch Mischungen von Mono-und/oder Di-und/oder Oligoalkylbenzolsulfonaten eingesetzt werden. Solche Sulfonate lassen sich durch Alkylierung von Benzol, z. B. mit linearen oder verzweigten Olefinen, in Gegenwart geeigneter Alkylierungskatalysatoren und anschließende Sulfonierung herstellen. Ebenfalls geeignet als leichter lösliche Sulfonate sind Alkansulfonate mit 8 bis 18, vorzugsweise mit 10 bis 17 C-Atomen, wie sie sich z. B. durch Sulfoxidation von Paraffinen herstellen lassen.

Geeignete schwerer lösliche Sulfonate sind Monoalkylbenzolsulfonate mit 14 bis 20, vorzugsweise 14 bis 18 C-Atomen in der, gegebenenfalls verzweigten, Alkylkette, oder Di-bzw. Oligoalkylbenzolsulfonate mit 1 bis 20 C-Atomen pro, gegebenenfalls verzweigter, Alkylkette, wobei die Gesamtzahl der C-Atome in den Alkylketten pro Molekül 12 bis 30, vorzugsweise 14 bis 24, beträgt. Es können auch Mischungen von Mono-und/oder Di-und/oder Oligoalkylbenzolsulfonaten eingesetzt werden. Solche Sulfonate lassen sich durch Alkylierung von Benzol, wie oben beschrieben, herstellen.

Ebenfalls geeignet als hydrophobe Tensidkomponente sind Alkansulfonate mit 19 bis 26, vorzugsweise 19 bis 24 C-Atomen, wie sie sich z. B. durch Sulfoxidation von Paraffinen herstellen lassen. Geeignet sind ebenfalls die aus der Ölschicht gewonnenen Petroleumsulfonate.

In vielen Versuchen hat sich gezeigt, daß der Zusatz von Cotensiden von Vorteil ist. In manchen Fällen, besonders in Gegenwart von Lagerstättenwässern mit höheren Gehalten an Erdalkaliionen, ist die Verwendung von Cotensiden unumgänglich. Geeignete Cotenside sind einwertige Alkohole mit 3 bis 7 C-Atomen, wie z. B. Propanolisomere, Butanolisomere, Pentanolisomere, Hexanolisomere, etc., oder mehrwertige Alkohole mit 3 bis 10, vorzugsweise 3 bis 7 C-Atomen, wie Propandiol, Butandiol, Pentandiol, Hexandiol, Octandiol, etc. Geeignet sind auch Mischungen beider Cotensidtypen. Als besonders geeignet haben sich die Alkylether mehrwertiger Alkohole mit 2 bis 8 C-Atomen, wie Ethylenglykolmonoethylether, Ethylenglykolmonoisopropylether, Ethylenglykolmonobutylether, Diethylenglykolmonobutylether, etc., erwiesen.

Die erfindungsgemäßen Tensid-bzw. Tensid-Cotensidgemische müssen an die Bedingung des betreffenden Lagerstättensystems angepaßt werden. Kritische Größen sind hierbei die Bestandteile des Lagerstättenwassers, und, sofern dieses nicht reinjiziert wird, auch die Zusammensetzung des Flutwassers, ferner der Charakter des Lagerstättenöls, die Temperatur bzw. der Temperaturbereich der Lagerstätte, gegebenenfalls die Zusammensetzung der Gasphase und der Lagerstättendruck. Vorversuche zur Anpassung des Tensidsystems an die Lagerstättenbedingungen sind literaturbekannte Phasenuntersuchungen, etwa im Sinne eines Phasenvolumendiagramms (vgl. H. Kraft, G. Pusch, SPE/DOE-Paper 10714), wobei an einer Mischung aus Lagerstättenöl, Lagerstättenwasser bzw. Flutwasser und Tensid bzw. Tensid/Cotensid die Volumina der oberen, mittleren und unteren Phase in Abhängigkeit der Temperatur, der Tensidkonzentration und des Öl-Wasser-Verhältnisses bestimmt werden. Wünschenswert ist eine solche Tensid-bzw. Tensid/Cotensidkombination, die zu einem weitgehend temperaturunabhängigen Phasenverhalten mit ausgeprägter Bildung einer mittelphasigen Mikroemulsion führt. Ein solcher Befund allein ist allerdings nicht hinreichend. So haben Untersuchungen am System Dekan/Seewasser in Gegenwart von Alkylbenzolsulfonat/Nonylphenoloxethylaten/i-Butanol zwar das gewünschte weitgehend temperaturunabhängige Phasenverhalten, nicht jedoch die parallel hierzu in Flutversuchen untersuchte Entölung gezeigt. Weitere notwendige Vorversuche zur Anpassung des Tensidsystems an die Lagerstätte, die unmittelbar dessen Wirksamkeit aufzeigen, bestehen daher in linearen Verdrängungsversuchen an Modellformationen aus Sandstein oder Sand, den sogenannten Flutversuchen, wie sie in den Beispielen beschrieben werden. Im Unterschied zu den Phasenuntersuchungen, bei denen ein während des Tensidflutens kaum realisierter Gleichgewichtszustand betrachtet wird, berücksichtigen die Verdrängungsversuche die realiter in der Lagerstätte sich häufig abspielenden Ungleichgewichtsprozesse sowie die Tensidretention.

Flutversuche möglichst an Originalbohrkernmaterial und, soweit notwendig, unter Lagerstättenbedingungen, dienen einer labormäßigen Optimierung des Tensid/Cotensidsystems hinsichtlich der Flüssigkeitsform des Wirkstoffs (Lösung, Dispersion oder Emulsion), seiner Konzentration und seines Volumens, ferner hinsichtlich der Art, Konzentration und des Volumens der als Mobilitätspuffer zu verwendenden Polymerlösung.

Aufgrund dieser Vorversuche wird die Tensidlösung oder Dispersion mit Injektionspumpen in die Lagerstätte eingebracht. Dieses geschieht in Form von Slugs, d. h. begrenzter Volumina von 0,01 bis 2 PV ( = Porenvolumen der Lagerstätte), vorzugsweise 0,02 bis 1,2 PV. Die Größe des Tensidslugs richtet sich nach der Tensidkonzentration und nach der Wirtschaftlichkeit. Gewöhnlich liegt die Tensidkonzentration zwischen 0,1 und 20 %, vorzugsweise zwischen 0,2 und 10 %. In dieser Tensidkonzentration sind nur die Sulfonate enthalten. Die Massen des leichter löslichen zu denen des schwerer löslichen Sulfonats verhalten sich zueinander wie 6 : 1 bis 1 : 3, vorzugsweise wie 5 : 1 bis 1 : 2.

Wird ein Cotensid zugesetzt, so soll sich seine Masse zu der der Tensidmischung verhalten wie 1 : 5 bis 5 : 1, vorzugsweise wie 1 : 3 bis 3 : 1.

Zweckmäßigerweise wird vor der Injektion der Tensidflüssigkeit mit Wasser geflutet, wobei als Flutwasser vorzugsweise das produzierte Formationswasser eingesetzt wird. In speziellen Fällen kann es zweckmäßig sein, mit einem Wasser anderer Zusammensetzung als der des Formationswassers zu fluten. Dies kann logistische Gründe haben, oder es empfiehlt sich, die Lagerstätte hinsichtlich einer bestimmten Salinität zu konditionieren. Die Größe des Flutwasserslugs beträgt 0,01 bis 4 PV, vorzugsweise 0,1 bis 2 PV.

Sowohl aus Gründen der Mobilitätskontrolle - wie erwähnt - als auch zum Schutz der Tensidflüssigkeiten vor eindringendem Flutwasser kann man nach der letzten Tensidflüssigkeit Polymerlösung in die Lagerstätten injizieren. Hierzu wird ein Polymer oder ein Polymergemisch in einer solchen Konzentration in dem Flutwasser gelöst, daß die Viskosität 1,2-bis 10mal so hoch ist wie die des Öls unter Lagerstättenbedingungen. Als Polymere kommen Biopolymere, wie beispielsweise Xanthan Gum, oder Cellulosederivate und Polyacrylamide infrage, die in Gegenwart der vorgegebenen Salinität noch eine ausreichende Viskosität besitzen und keine Fällungen zeigen. Zweckmäßigerweise schließt sich an das Injizieren der Polymerlösung normales Wasserfluten als Trieb an. Dieses wird solange fortgesetzt, wie sich wirtschaftlich Öl gewinnen läßt.

Die nachfolgenden Beispiele sollen das erfindungsgemäße Verfahren erläutern. Sie sind lineare Verdrängungsversuche entweder an Sandschüttungen oder an Sandsteinbohrkernen als labormäßige Modellformationen.

Zur Herstellung einer Sandschüttung wurde ein thermostatisierbares Stahlrohr von 140 cm Länge und 5 cm Durchmesser, versehen mit Temperaturmeßeinrichtung und Manometer, beidseitig verschließbar durch Gewindeverschlüsse mit Kapillareingang und Druckhalteventilausgang, mit kantengerundetem Quarzsand beschickt. Sodann wurde mittels einer Membranpumpe die Sandschüttung mit Salzwasser benetzt und durch einen Thermostaten auf die gewünschte Temperatur gebracht. Mit Hilfe von Drucktransmittern wurde die Permeabilität der Schüttung bestimmt. Sodann erfolgte Sättigung mit einem Modellöl (n-Dekan oder Rohöl), wobei sich gleichzeitig der Haftwassergehalt bestimmen ließ. Anschließend wurde mit einer Geschwindigkeit von ca. 1 m/d 1,5 PV (1 PV ca. 1 400 ml) Salzwasser injiziert, wobei sich ein Verwässerungsgrad von 98 bis 100 % einstellte. Nach diesem sogenannten Wasserfluten wurde zunächst das Tensidgemisch und anschließend die Polymerlösung, beide als Slug, injiziert. Als Trieb wurde weiteres Salzwasser eingepreßt.

Zur Herstellung von Modellformationen aus konsolidiertem Gestein wurden zylindrische Bohrkerne von 50 cm Länge und 8 cm Durchmesser aus Bentheimer Sandstein in Epoxidharz eingebettet. Die Porenvolumina betrugen ca. 600 ml, die Flutgeschwindigkeit ca. 0,5 m/d. Die Temperierung bei den in Harz eingebetteten Kernen erfolgte mittels eines offenen Temperaturbades. Ansonsten bestanden keine Unterschiede bei dem Betrieb dieser Modellformationen im Vergleich zu dem an Sandschüttungen. Bei allen Verdrängungsversuchen wurden nach der Injektion von 0,3 PV Tensidsystem 0,6 PV einer 0,2prozentigen Lösung von Polymer-Flocon 4800 (Xanthan, Pfizer) in dem betreffenden Salzwasser in die Formation eingepreßt.

Beispiele 1 bis 10

Die erfindungsgemäßen Beispiele sind in der folgenden Tabelle dargestellt. Es wurden folgende Substanzen eingesetzt:

Öl: D n-Dekan 96 %
N 35 ° API-Rohöl
   61 % paraffinische, 16 % naphthenische, 23 % aromatische Kohlenwasserstoffe
   $\eta_{20\,°C}$ 6 mPa s

Salzwasser: S synthetisches Seewasser
   1,12 % Na , 0,035 % K , 0,047 % Ca   , 0,133 % Mg   , 2,03 % Cl , 0,27 % $SO_4^2$
T synthetisches Formationswasser
   1,51 % Na , 0,035 % K , 0,047 % Ca   , 0,133 % Mg   , 2,64 % Cl , 0,27 % $SO_4^2$

leicht lösliche Sulfonate: $a_1$ ($C_{10}$-$C_{13}$)-n-Alkylbenzolsulfonat (MARLON® A, Hüls AG)
$a_2$ ($C_{14}$-$C_{17}$)-sec.-Paraffinsulfonat (MARLON® PS 60)

schwer lösliche Sulfonate: $b_1$ i-Octyl-butylbenzolsulfonat
   Aktivsubstanz 52 %, Neutralöl 0,1 %
$b_2$ i-Octyl-butylbenzolsulfonat/i-Dodecyl-butylbenzolsulfonat 1 : 1
   Aktivsubstanz 49 %, Neutralöl 3 %
$b_3$ i-Dodecyl-butyl-benzolsulfonat
   Aktivsubstanz 46 %, Neutralöl 5,8 %
$b_4$ i-Hexadecyl-butyl-benzolsulfonat
   Aktivsubstanz 38 %

Cotenside: $c_1$ Ethylenglykolbutylmonoether (99 %)
$c_2$ Diethylenglykolbutylmonoether (97 %)

6

## Tabelle

| Nr. | Formation Permeab. (D) | Öl | Salz-wasser | Temp. (°C) | Sulfonate leicht löslich | Sulfonate schwer löslich | Cotensid | $DeltaE_W$* (% OOIP) | $DeltaE_T$* | Deltap** (bar/m) |
|---|---|---|---|---|---|---|---|---|---|---|
| 1 | Kern, 1,9 | D | S | 20 | $a_1$, 2 % | $b_1$, 2 % | $c_1$, 4 % | 45 | 38 | 1,2 |
| 2 | Kern, 0,8 | D | S | 54 | $a_1$, 2 % | $b_1$, 2 % | $c_1$, 4 % | 51 | 36 | 0,5 |
| 3 | Sand, 1,2 | D | S | 90 | $a_1$, 2 % | $b_1$, 2 % | $c_2$, 4 % | 80 | 17 | 0,9 |
| 4 | Kern, 2,4 | D | S | 20 | $a_1$, 2 % | $b_1$, 2 % | $c_1$, 3 % | 58 | 21 | 1,0 |
| 5 | Kern, 2,4 | D | S | 20 | $a_1$, 2 % | $b_3$, 2 % | $c_2$, 4 % | 52 | 37 | 1,1 |
| 6 | Kern, 1,8 | D | S | 50 | $a_1$, 2 % | $b_3$, 2 % | $c_2$, 4 % | 56 | 34 | 1,3 |
| 7 | Sand, 1,3 | D | S | 20 | $a_2$, 2 % | $b_1$, 2 % | $c_1$, 4 % | 74 | 24 | 1,1 |
| 8 | Sand, 1,1 | D | S | 50 | $a_2$, 2 % | $b_1$, 2 % | $c_1$, 4 % | 80 | 18 | 1,1 |
| 9 | Sand, 2,2 | D | S | 50 | $a_2$, 2 % | $b_2$, 2 % | $c_1$, 4 % | 76 | 16 | 1,1 |
| 10 | Kern, 0,7 | N | T | 90 | $a_2$, 2 % | $b_4$, 2 % | $c_1$, 4 % | 85 | 10 | 1,4 |

\* $DeltaE_W$ bzw. $DeltaE_T$ bedeuten die Entölung (% OOIP) mittels Wasserfluten bzw. nachfolgendem Tensidfluten
\*\* Deltap ist der maximale Druckgradient

0 272 406

Die Beispielblöcke 1 bis 3, 5 bis 6 bzw. 7 bis 8 zeigen, daß durch die erfindungsgemäß einzusetzenden Sulfonatgemische eine überwiegend quantitative Tertiärentölung der Modellformationen über einen weiten Temperaturbereich möglich ist. Ein bedenklich hoher Druckaufbau wurde in keinem Fall beobachtet. Die in einigen Fällen (Beispiele 2, 7 und 8) bestimmte Gesamttensidretention ergab Werte von ca. 0,2 bis 0,3 mg/g Sand bzw. Sandstein, womit angezeigt wird, daß bei dem erfindungsgemäßen Verfahren nur ein realtiv geringer Teil des Tensids durch Adsorption und anderen Retentionsvergängen dem Flutprozeß verlorengeht.

## Ansprüche

1. Verfahren zur erhöhten Gewinnung von Erdöl aus einer unterirdischen Lagerstätte, die mindestens durch eine Injektions-und eine Produktionsbohrung durchteuft ist, durch Einpressen einer Lösung oder Dispersion einer Mischung von mindestens 2 Sulfonaten,
dadurch gekennzeichnet,
daß deren Löslichkeit insofern verschieden ist, als aus dem leichter löslichen Sulfonat durch Zugabe von 3 bis 11 Gewichtsprozent Butylglykol oder 2 bis 8 Gewichtsprozent Butyldiglykol in synthetischem Seewasser bei Zimmertemperatur eine 4gewichtsprozentige Lösung gerade eben herstellbar ist, während aus dem - schwerer löslichen Sulfonat erst durch Zugabe von 20 bis 60 Gewichtsprozent Butylglykol oder 16 bis 40 Gewichtsprozent Butyldiglykol bei Zimmertemperatur in synthetischem Seewasser eine 4gewichtsprozentige Lösung gerade eben herstellbar ist.

2. Verfahren nach Anspruch 1,
dadurch gekennzeichnet,
daß das leichter lösliche Sulfonat ein Monoalkylbenzolsulfonat mit 5 bis 13 Kohlenstoffatomen in der gegebenenfalls verzweigten Alkylkette, ein Di-bzw. Trialkylbenzolsulfonat mit 1 bis 10 Kohlenstoffatomen, wobei die Gesamtzahl der C-Atome in den Alkylketten 5 bis 11 beträgt, oder ein Alkansulfonat mit 8 bis 18 Kohlenstoffatomen und das schwerer lösliche Sulfonat ein Monoalkylbenzolsulfonat mit 14 bis 20 Kohlenstoffatomen, ein Di-oder Oligoalkylbenzolsulfonat mit 1 bis 20 C-Atomen pro gegebenenfalls verzweigter Alkylkette, wobei die Gesamtzahl der C-Atome in den Alkylketten pro Molekül 12 bis 30 beträgt, oder ein Alkansulfonat mit 19 bis 26 Kohlenstoffatomen, ist.

3. Verfahren nach einem der Ansprüche 1 oder 2,
dadurch gekennzeichnet,
daß sich die Massenverhältnisse der des leichter löslichen zu denen des schwerer löslichen Sulfonats verhalten wie 6 : 1 bzw. 1 : 3.

4. Verfahren nach einem der Ansprüche 1 bis 3,
dadurch gekennzeichnet,
daß als Cotenside ein-und/oder mehrwertige Alkohole und/oder Alkylether mehrwertiger Alkohole eingesetzt werden.

5. Verfahren nach einem der Ansprüche 1 bis 4,
dadurch gekennzeichnet,
daß sich die Massenverhältnisse des Cotensids zur Tensidmischung verhalten wie 1 : 5 bis 5 : 1.

6. Verfahren nach einem der Ansprüche 1 bis 5,
dadurch gekennzeichnet,
daß die zu injizierende Tensidlösung oder -dispersion eine Konzentration von 0,1 bis 20 % besitzt.

7. Verfahren nach einem der Ansprüche 1 bis 6,
dadurch gekennzeichnet,
daß die Sluggröße der tensidhaltigen Flüssigkeit 0,01 bis 2 Porenvolumen (PV) beträgt.

8. Verfahren nach einem der Ansprüche 1 bis 7,
dadurch gekennzeichnet,
daß nach der Injektion des Tensidslugs Formations-oder Flutwasser in die Lagerstätte eingepreßt wird.

9. Verfahren nach Anspruch 8,
dadurch gekennzeichnet,
daß das Formations-oder Flutwasser ein wasserlösliches, viskositätserhöhendes Polymer enthält.